Europäisches Patentamt

European Patent Office

Office européen des brevets

(19)

(11) Numéro de publication : **0 508 876 A1**

# (12) DEMANDE DE BREVET EUROPEEN

(21) Numéro de dépôt : **92400958.2**

(22) Date de dépôt : **07.04.92**

(51) Int. Cl.⁵ : **B01D 53/34**

(30) Priorité : **08.04.91 FR 9104324**

(43) Date de publication de la demande :
**14.10.92 Bulletin 92/42**

(84) Etats contractants désignés :
**BE DE ES FR GB IT NL**

(71) Demandeur : **INSTITUT FRANCAIS DU PETROLE**
**4, Avenue de Bois Préau**
**F-92502 Rueil-Malmaison (FR)**

(71) Demandeur : **BABCOCK ENTREPRISE**
**80, rue Emile Zola**
**F-93123 LA CORNEUVE (FR)**

(72) Inventeur : **Martin, Gérard**
**34, avenue de Colmar**
**F-92500 Rueil Malmaison (FR)**
Inventeur : **Bouju, Jean-Louis**
**47, avenue de la Libération**
**F-95270 Luzarches (FR)**

(54) **Procédé et dispositif de traitement des effluents gazeux issus d'une unité de craquage catalytique.**

(57)    Le dispositif comprend au moins un premier étage de régénération du catalyseur utilisé pour l'opération de craquage catalytique. Selon l'invention, les effluents gazeux issus du régénérateur de catalyseur de craquage sont traités dans une unité de récupération de chaleur (CR) comportant une chambre (15) de traitement du type à lit entraîné ; l'absorbant introduit dans cette chambre (15) ayant une granulométrie "fine", comprise entre 0,1 et 100 $\mu$m et pouvant être régénéré dans le dispositif en aval de l'unité de récupération de chaleur (CR).

FIG.1

EP 0 508 876 A1

Jouve, 18, rue Saint-Denis, 75001 PARIS

La présente invention concerne un procédé et un dispositif destinés à traiter des fumées issues d'une unité de craquage catalytique.

Lors du craquage catalytique de charges hydrocarbonées, des fumées dites de régénération (ou effluents) issus des catalyseurs utilisés, sont produites. Ces fumées contiennent des polluants, notamment des composés soufrés (SO2, SO3, $H_2S$) et azotés et/ou des nitrates qu'il est nécessaire de réduire voire d'éliminer totalement car ces polluants présentent un danger pour l'environnement.

De nombreux traitements ont déjà été proposés pour dépolluer ces fumées, notamment pour désulfurer ces effluents. Une façon classique de traiter de telles fumées consiste à les laver après leur passage dans des échangeurs de chaleur. Cette technologie requiert des équipements lourds qui représentent donc un investissement coûteux.

Une autre manière de désulfurer des effluents issus de craqueurs catalytiques, consiste à opérer non plus par voie humide, comme décrit ci-dessus, mais par voie sèche, c'est-à-dire à utiliser des lits dits "circulants". Les demandes de brevet FR-A-2.632.872 et FR-A-2.642.663 déposées au nom de la demanderesse montrent deux conceptions basées sur le principe d'une désulfuration d'effluents gazeux en lit fluidisé circulant. Le premier document prévoit l'utilisation d'absorbants non régénérables tels que des chaux ou des calcaires en tant qu'absorbants, tandis que le second document (FR-A-2.642.663) divulgue l'introduction d'un absorbant régénérable dans la zone d'absorption. Une étape ultérieure de régénération de l'absorbant usé est alors requise, ainsi que des étapes de séparation et de recyclage des particules dans la zone de désulfuration.

Dans les deux cas qui viennent d'être cités, la masse absorbante présente une granulométrie comprise entre 5 et 5000 micromètres, de préférence supérieure à 100 µm.

Cette granulométrie implique l'utilisation de cyclones de séparation de taille importante en aval de la zone de traitement.

De plus, avec de telles granulométries, il faut opérer avec une température minimale de l'ordre de 850°C pour avoir une vitesse et un rendement de décarbonatation suffisants.

Par ailleurs, l'inertie thermique de ce type de réacteurs est importante du fait de l'utilisation de matériaux réfractaires.

Des chaudières désulfurantes dites "en lit entraîné", c'est-à-dire avec une injection pulvérulante de l'absorbant dans la zone de désulfuration, sont de plus en plus utilisées car, vis-à-vis des chaudières désulfurantes classiques, telles que décrites ci-avant, de tels générateurs de chaleur sont moins coûteux et plus faciles à mettre en oeuvre.

Les demandes de brevets FR-A-2.636.720 et EN. 90/08.311 déposées au nom de la demanderesse, montrent un tel art antérieur.

La présente invention concerne donc un procédé et un dispositif du type défini en tête de la description selon lesquels, conformément à l'invention, le traitement des effluents issus du craquage catalytique est réalisé par une unité du type "en lit entraîné".

Vis-à-vis de l'art antérieur, et notamment des techniques de désulfuration utilisant des lits circulants, la présente invention présente les avantages suivants :

– une réduction sensible des investissements puisqu'il n'y a plus de séparateurs gaz-solides (par exemple cyclones) en sortie de la chambre de désulfuration ;

– une diminution de la perte de charge totale de l'installation due notamment à l'absence de cyclones et à l'absence d'une phase dense à la base de la chambre de désulfuration ; il résulte de cet avantage un coût opératoire plus faible ;

– une réduction de l'inertie thermique résultant de l'absence de matériaux réfractaires, d'où des démarrages plus rapides du système ;

– une dénitrification additionnelle des fumées.

Les avantages énoncés ci-dessus sont donc obtenus avec un dispositif de traitement des effluents du type défini en tête de la description, qui comprend, conformément à l'invention, une unité de récupération de chaleur CR comportant une chambre de traitement des effluents du type en lit entraîné ayant au moins une entrée pour les effluents issus de l'un au moins des étages de régénération.

De façon caractéristique, la granulométrie de la masse absorbante utilisée pour la désulfuration est comprise entre 0,1 et 100 micromètres.

Avantageusement, le dispositif selon l'invention peut comporter un moyen destiné à diminuer la pression des effluents gazeux issus de l'un au moins desdits étages de régénération, et un moyen destiné à réchauffer lesdits effluents, entre l'un au moins desdits étages de régénération et la chambre de traitement.

L'unité de récupération de chaleur CR peut en outre comporter un échangeur de chaleur situé en aval de la chambre de traitement, alimentant un dépoussiéreur qui comprend au moins une première sortie pour les fumées propres et une deuxième sortie pour l'absorbant usé, une partie de l'absorbant usé étant recyclé vers ladite chambre de traitement.

Selon l'un des modes de réalisation de l'invention, la chambre de traitement peut être pourvue d'au moins un injecteur pour un absorbant non régénérable, un réservoir de stockage pour la partie non recyclée de l'absorbant usé étant alors prévu.

Selon un autre mode de réalisation de l'invention, la chambre de désulfuration peut être pourvue d'au moins une entrée pour un absorbant régénérable.

Préférentiellement, le dispositif selon l'invention comprend alors un moyen destiné à régénérer ledit absorbant.

De façon particulière, le moyen de régénération d'absorbant peut comprendre un régénérateur d'absorbant du type à lit fluidisé, un séparateur et/ou un échangeur de chaleur.

Dans tous les cas envisagés ci-avant, un dispositif destiné à mélanger l'absorbant frais et l'absorbant recyclé vers la chambre de désulfuration, peut avantageusement être prévu, en amont de la chambre de désulfuration.

Sans sortir du cadre de l'invention, l'unité de craquage catalytique peut comprendre deux étages de régénération, l'un fonctionnant en excès d'air, l'autre en défaut d'air.

Dans un tel mode de réalisation, le dispositif selon l'invention comprend en outre un incinérateur placé en amont de la chambre de désulfuration, alimenté par les fumées oxydantes issues du deuxième étage de régénération et les fumées réductrices issues du premier étage de régénération.

Selon un autre de ses aspects, l'invention vise à fournir un procédé pouvant être mis en oeuvre par le dispositif défini plus haut.

Conformément à l'invention, le procédé de traitement des effluents gazeux consiste essentiellement à :

– introduire séparément, dans une unité de récupération de chaleur CR, des parties d'absorbant de granulométrie comprise entre 0,1 et 100 μm et lesdits effluents gazeux ;
– mettre en contact, au niveau d'une chambre de traitement de type à lit entraîné faisant partie de ladite unité de récupération, les effluents et les particules d'absorbant ;
– séparer les fumées désulfurées des parties d'absorbant usé.

L'invention sera mieux comprise à la lecture de la description faite ci-après, à titre indicatif, mais non limitatif, en référence aux dessins annexés sur lesquels :

– la figure 1 est un schéma illustrant selon un premier mode de réalisation de l'invention, un dispositif de traitement des effluents,
– les figures 2, 3 et 4 illustrent chacune respectivement un second, troisième et quatrième mode de réalisation de l'invention.

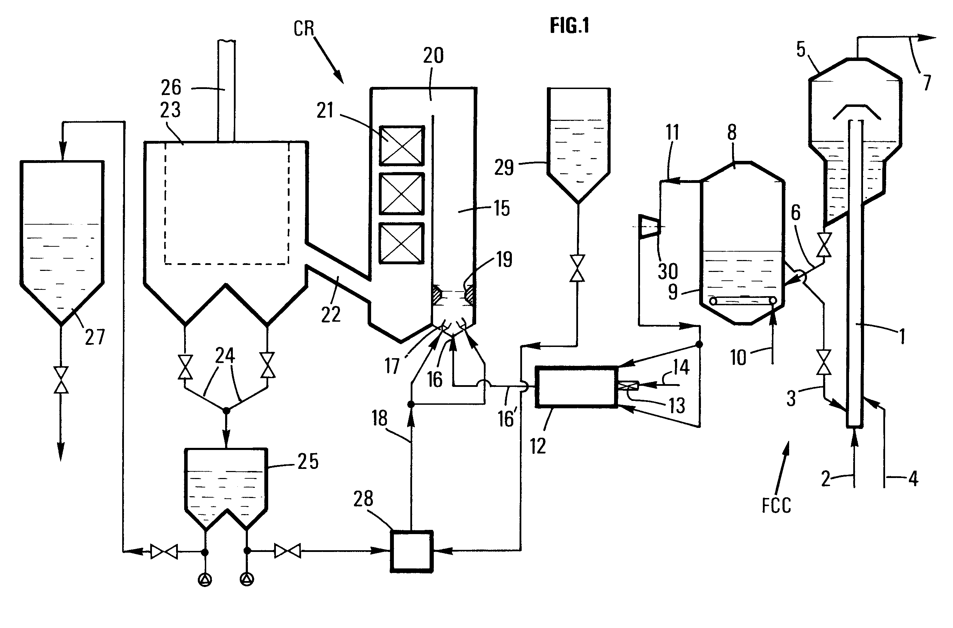

La figure 1 montre un dispositif comportant une unité de craquage catalytique FCC à un seul étage de régénération fonctionnant en oxydation totale, auquel est associée une chaudière de récupération CR équipée d'une chambre de désulfuration utilisant des masses non régénérables.

L'unité de craquage catalytique FCC comprend un riser 1, ou tube élévateur de catalyseur, à la base duquel sont injectés la charge à traiter (ligne 4), le catalyseur (ligne 3) et la vapeur de préentrainement du catalyseur (ligne 2). Le mélange résultant circule de bas en haut dans le riser. L'extrémité supérieure du riser débouche dans un stripper 5 où est réalisée la séparation catalyseur-hydrocarbures craqués. Le catalyseur est envoyé dans le régénérateur 8 par la ligne 6, tandis que les hydrocarbures craqués sortent du stripper par la ligne 7 et sont envoyés par exemple vers une tour de fractionnement. Le coke qui s'est déposé sur le catalyseur pendant la phase de craquage, est brûlé dans un lit fluidisé 9 alimenté en air de combustion par une ligne 10. Le catalyseur régénéré est renvoyé dans le riser de craquage 1 par la ligne 3.

Selon l'invention, les fumées résultant de la régénération du catalyseur sont dirigées par une ligne 11 vers une chambre de désulfuration 15.

De préférence, un détendeur 30 et un dispositif de réchauffage 12 sont respectivement situés sur la ligne 11. Le détendeur 30 permet de ramener les fumées à une pression proche de la pression atmosphérique tandis que le dispositif de réchauffage 12 permet aux fumées d'entrer dans la chambre de désulfuration 15 avec une température optimale.

Dans le dispositif de réchauffage 12, les fumées résultant de la régénération du catalyseur sont mélangées avec les effluents d'un ou plusieurs brûleurs 13 alimentés en combustible par une ligne 14.

La quantité de combustible introduite dans la chambre de désulfuration 15 est réglée de façon à ce que la température moyenne dans ladite chambre située en aval de cette chambre de réchauffage 12, soit comprise entre 750 et 1250°C, et de préférence entre 800 et 1000°C. La liaison entre le dispositif de réchauffage 12 et la chambre de désulfuration 15 peut être réalisée en aval du dispositif 12 grâce à une ligne spécifique 16′, comme représenté sur la figure 1, mais il n'est pas exclu que ces deux chambres aient une paroi commune et que le transfert des fumées se fasse directement par un orifice de communication. Tout dispositif 16 connu en soi peut être utilisé comme moyen d'introduction des effluents.

Des injecteurs d'absorbants 17 sont localisés de préférence au voisinage du point d'introduction des fumées dans la chambre de désulfuration. Cette extrémité de la chambre de désulfuration peut en outre être équipée de dispositifs 19 qui favorisent le mélange de l'absorbant avec les fumées. Dans le cas de la figure 1, les fumées et l'absorbant circulent de bas en haut dans la chambre de désulfuration, et passent ensuite dans une zone équipée d'échangeurs tubulaires 21, via le passage 20.

Ce mode de circulation n'est pas impératif, et des configurations avec écoulement de haut en bas du mélange fumées-absorbant peuvent aussi être envisagées. Les fumées refroidies quittent la chaudière par une ligne 22 et sont envoyées vers un dépoussiéreur final 23. Les fumées ou gaz dépoussiérés sortent du dépoussiéreur 23 par une ligne 26 qui les dirige par exemple vers une cheminée (non représentée).

L'absorbant usé quitte le dépoussiéreur final par une ou plusieurs lignes 24 par lesquelles il est envoyé vers une trémie 25 de stockage intermédiaire. De la trémie 25, l'absorbant usé est transféré partiellement ou en totalité dans une trémie d'évacuation définitive 27. La fraction recyclée de l'absorbant est envoyée dans un dispositif 28 où elle est mélangée à l'absorbant frais provenant d'une trémie 29. La mise en place du mélangeur 28 n'est pas impérative, et on peut envisager des injections séparées pour l'absorbant frais et pour l'absorbant recyclé.

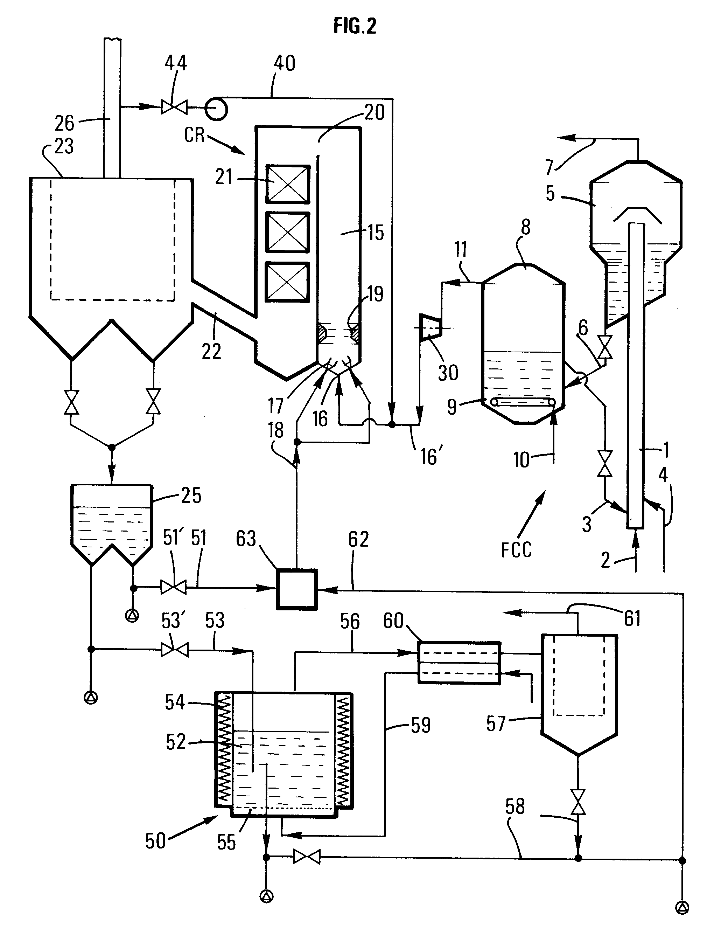

La figure 2 illustre l'association d'un craqueur FCC comportant un seul régénérateur fonctionnant en oxydation totale, avec une chaudière de récupération CR équipée d'une chambre de désulfuration 15 utilisant des masses régénérables. L'unité de craquage FCC est identique à celui de la figure 1. Seules les différences vis-à-vis du dispositif représenté à la figure 1 seront maintenant décrites. Par ailleurs, les éléments identiques seront repérés par un même signe de référence sur toutes les figures de la présente demande.

Après détente dans le dispositif 30, les fumées circulant dans la ligne 11 sont envoyées directement dans la chambre de désulfuration 15 par une ligne 16'. Les injecteurs 17 placés à proximité de l'entrée de la chambre de désulfuration 15 permettent d'introduire selon ce mode de réalisation, l'absorbant régénérable.

Dans les conditions de fonctionnement habituelles des unités FCC, la température des fumées issues du régénérateur 9 est généralement proche de la température requise pour un fonctionnement optimal de la chambre de désulfuration 15. Les fumées peuvent donc être injectées directement dans la chambre de désulfuration 15, à partir du dispositif de détente 30. La température optimale dans la chambre 15 est de préférence comprise entre 500°C et 700°C. Dans les cas particuliers où un ajustement de la température des fumées est nécessaire, une opération de réchauffage peut être réalisé par un dispositif de réchauffage (tel que 12 représenté à la figure 1). S'il s'avère nécessaire au contraire de refroidir les fumées du régénérateur 9 on injectera des fumées refroidies prélevées dans la ligne d'évacuation 26 des fumées dépoussiérées. Une dérivation 40 entre la ligne d'évacuation 26 et la ligne 16' peut être prévue à cet effet. Par ailleurs, une vanne 44 peut être placée sur la dérivation 40 afin de contrôler le débit des fumées froides recyclées.

Les deux modes d'ajustement de la température des fumée décrits ci-avant, ne sont évidemment pas limitatifs.

Après un parcours substantiellement ascendant dans la chambre de désulfuration 15, les fumées et l'absorbant sont transférés dans la zone où sont localisés les échangeurs de chaleur tubulaire 21, après avoir traversé le passage 20. Le mélange est évacué de l'unité de désulfuration par la ligne 22 qui le dirige vers le dépoussiéreur 23.

En sortie du dépoussiéreur final 23, au niveau de la trémie de stockage interne 25, une fraction de l'absorbant peut être recyclée directement dans la chambre de désulfuration 15, par une ligne 51 comportant de préférence une vanne de contrôle 51'. L'autre partie de l'absorbant est alors envoyée vers un moyen de régénération d'absorbant 50, via une ligne 53 comportant de préférence une vanne de contrôle 53'. Ce moyen 50 comporte essentiellement un régénérateur d'absorbant 52 équipé de préférence de moyens de réchauffage de l'absorbant 54, afin de le porter à une température comprise entre 400 et 1000°C, et de préférence entre 550 et 750°C.

Le gaz réducteur utilisé pour la régénération de l'absorbant peut être par exemple de l'hydrogène, du méthane, de l'hydrogène sulfuré, du propane, du butane etc...

Le régénérateur d'absorbant 52 peut être par exemple un système à lit fluidisé comme indiqué sur la figure 2. Ce type de mise en oeuvre n'est cependant pas limitatif.

Le dispositif 55 utilisé dans le régénérateur d'absorbant 52 pour la distribution du gaz de régénération est par exemple constitué de plusieurs injecteurs.

L'extraction de l'absorbant régénéré peut être réalisée par entraînement avec les gaz de régénération, via une ligne 56 et avec récupération dans un dépoussiéreur 57. Si besoin est, l'absorbant peut aussi être extrait par soutirage gravitaire, grâce à une ligne 58 immergée dans le lit fluidisé. Les gaz de régénération sont amenés au lit fluidisé par une ligne 59, après avoir été éventuellement préchauffés dans un échangeur gaz-gaz 60, qui permet de récupérer la chaleur sensible des gaz de régénération et des solides entraînés, après leur utilisation dans le lit fluidisé.

Lorsque la régénération de l'absorbant a amené un dépôt de coke significatif sur ledit absorbant, celui-ci peut être éliminé par combustion dans un dispositif approprié non représenté sur la figure 2. Ce dispositif peut par exemple être localisé sur les lignes 56 ou 58 selon le mode d'extraction de l'absorbant régénéré du régénérateur 52. Une autre alternative consiste à réaliser successivement les opérations de régénération de l'absorbant et de combustion du coke déposé, dans le dispositif 52.

Après être passés dans le dépoussiéreur 57, les gaz de régénération chargés en produits soufrés quittent l'installation par une ligne 61 par laquelle ils peuvent être dirigés vers des équipements d'épuration et de valorisation du soufre (unité Claus par exemple). L'absorbant régénéré peut être envoyé vers un dispositif de mélange 63, via une ligne 62. Dans le mélangeur 63, l'absorbant régénéré est mélangé à l'absorbant non régénéré et l'ensemble des deux est finalement dirigé vers la chambre de désulfuration 15, via une ligne 18. Comme dans le premier mode de réalisation de l'invention, la mise en place du mélangeur n'est pas impérative et l'absorbant régénéré peut être injecté dans la chambre de désulfuration, indépendamment de l'absorbant non régénéré.

Par ailleurs, pour éviter une contamination de l'absorbant des oxydes de soufre par des solides provenant du craqueur catalytique et plus particulièrement par des fines de catalyseur, la liaison 11 peut être équipée de dépoussiéreurs très performants (cyclones tertiaires par exemple). Ces dispositifs ne sont pas représentés sur la figure 2.

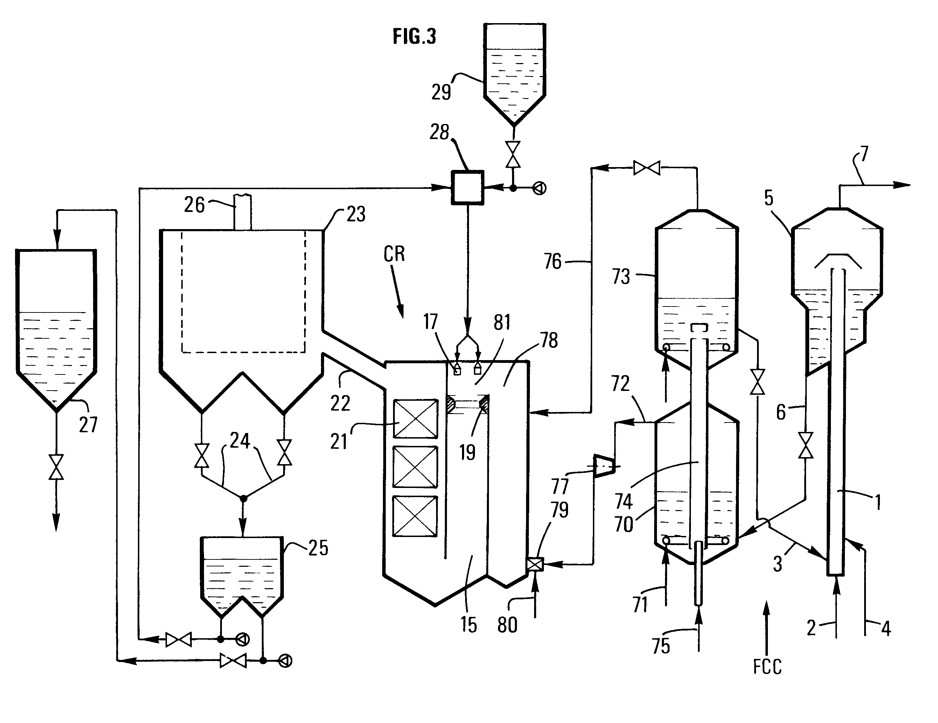

La figure 3 représente un dispositif selon l'invention comportant un craqueur à deux étages de régénération 70, 73 associé à une chaudière équipée d'une chambre de désulfuration fonctionnant avec un absorbant non régénérable. Selon cette figure, la configuration du craqueur 1 est la même que celle décrite à la figure 1. Seule la partie régénération est modifiée. Le catalyseur de craquage usé provenant du stippeur 5 par la ligne 6, est envoyé dans un premier régénérateur 70 alimenté en air par une ligne spécifique 71. Le premier régénérateur 70 fonctionne de préférence en défaut d'air et produit des fumées qui contiennent des imbrûlés gazeux ($H_2$, $CH_4$, CO, ...), qu'il est nécessaire d'incinérer avant de les introduire dans la chambre de désulfuration. Ces premières fumées réductrices sont évacuées par une ligne 72. Le catalyseur partiellement régénéré dans le premier régénérateur 70 est transféré dans un second régénérateur 73, par une colonne élévatrice 74, elle-même alimentée en air par une ligne 75. Le second régénérateur 73 fonctionne en excès d'air. Les fumées issues de ce régénérateur sont évacuées par une ligne 76. Elles sont oxydantes.

Les fumées en provenance du premier étage de régénération peuvent être détendues dans un dispositif spécifique 77 (vanne, turbine, etc, connu en soi), puis envoyées dans une chambre d'incinération 78, équipée d'un brûleur adapté 79. Pour réaliser l'opération, un complément de combustible amené par une ligne 80, peut être introduit dans le brûleur 79, afin d'obtenir une température finale d'incinération comprise entre 900 et 1300°C. Le complément d'énergie peut aussi être apporté par des brûleurs indépendants du dispositif d'introduction des fumées dans la chambre d'incinération 78. Les fumées issues du second étage de régénération et véhiculées par la ligne 76 sont ajoutées aux fumées d'incinération, juste avant la sortie de la chambre d'incinération 78. Le débit de combustible auxiliaire amené par la ligne 80 est ajusté de façon à obtenir une température moyenne dans la chambre de désulfuration 15 comprise entre 750 et 1250°C, et de préférence entre 800 et 1000°C. Le mélange sortant de la chambre d'incinération 78 est envoyé dans la chambre de désulfuration 15. Des injecteurs d'absorbant 17 sont placés à proximité de l'entrée 81 de ladite chambre, et comme précédemment, il peut être installé dans cette même zone des dispositifs 19 qui favorisent le mélange de l'absorbant avec les fumées.

Après leur parcours (descendant selon ce mode de réalisation) dans la chambre de désulfuration 15, les fumées et l'absorbant passent préférentiellement dans une zone équipée d'échangeurs de chaleurs 21 destinés à abaisser leur température avant leur sortie de la chaudière CR.

En aval de la chaudière proprement dite, le traitement du mélange fumées-absorbant, et donc l'installation associée est identique à celle décrite relativement au premier mode de réalisation de l'invention. Cette installation et son fonctionnement ne seront donc pas décrits ci-après.

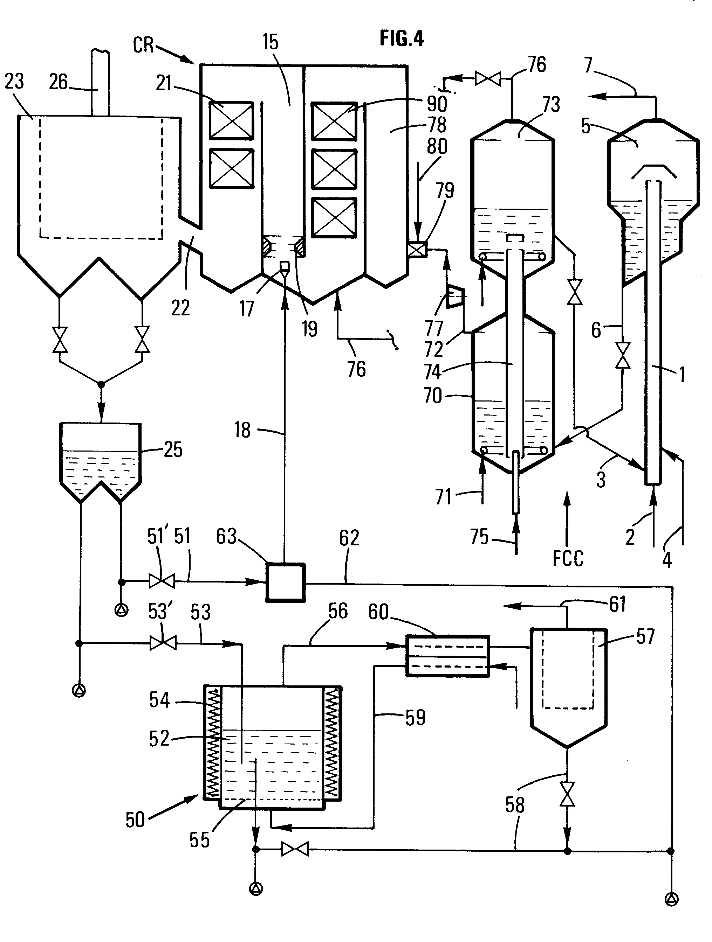

Sans sortir du cadre de l'invention, l'unité de traitement des effluents peut comporter, comme illustré par la figure 4, une unité de craquage catalytique FCC à deux étages de régénération associée à une chaudière comportant une chambre de désulfuration fonctionnant avec des absorbants régénérables. L'unité de craquage catalytique est identique à celle décrite en relation avec la figure 3.

En outre, selon ce mode de réalisation de l'invention, il peut être souhaitable de prévoir une zone 90 équipée d'échangeurs de chaleurs, entre la chambre d'incinération 78 et la chambre de désulfuration 15.

Dans ce cas, les fumées issues du premier étage de régénération 70 sont injectées comme déjà décrit, grâce à au moins un brûleur 79 dans la chambre d'incinération 78, tandis que les fumées provenant du second étage de régénération 73 sont ajoutées au courant de fumées principal en sortie de la zone 90 d'échange de chaleur, via la conduite 76.

La conduite 76 pourrait déboucher, sans sortir du cadre de l'invention, dans la chambre d'incinération 78 ; le choix dépend essentiellement de la température prévue dans les différentes chambres.

La température des fumées en sortie de cette zone 90, c'est-à-dire en entrée de la chambre de désulfuration 15 est avantageusement comprise entre 500 et 800°C. L'absorbant est introduit, comme déjà mentionné, de façon pulvérulente, à l'entrée de la chambre de désulfuration grâce à un ou plusieurs injecteurs 17.

Si nécessaire, la température dans la chambre de désulfuration 15 peut être abaissée par un courant de fumées froide (non représenté) dérivé de la cheminée finale 26.

Selon le mode de réalisation de l'invention représenté sur la figure 4, l'absorbant est régénéré dans un moyen approprié 50, tel que décrit par exemple en relation avec la figure 2.

Pour être plus précis quant aux conditions de fonctionnement de la chambre de désulfuration 15, il doit être mentionné que le temps de séjour des fumées dans cette chambre est compris entre 0,5 et 5 secondes, de préférence entre 1 et 2 secondes.

Par ailleurs, les concentrations moyennes habituelles de l'absorbant dans les fumées qui sortent de la chambre de désulfuration sont comprises entre 5 et 200 g/m³, de préférence entre 20 et 300g/m³.

Enfin, les absorbants non régénérables utilisés peuvent être choisis parmi des produits calciques (chaux, calcaires) ou encore parmi des produits ayant une teneur importante en carbonate de calcium (cru de cimenterie par exemple).

Pour ce qui concerne les absorbants régénérables, des produits à base d'oxyde de magnésium ont été utilisés avec succès. Des composants qui facilitent la fixation des oxydes de soufres (oxydes de cérium, métaux nobles par exemple) peuvent avantageusement être ajoutés aux absorbants régénérables cités plus haut afin de faciliter la fixation des oxydes de soufre.

L'invention permet en outre de réaliser des traitements de dénitrification des fumées, en injectant un autre type d'absorbant au niveau de la chambre 15 de désulfuration. Cet absorbant aura de préférence une granulométrie qui autorise sa circulation en lit entraîné dans ladite chambre 15.

Des vannes ou tout autre moyen capable de réguler le débit sur les différentes lignes du dispositif selon l'invention peuvent être prévues, comme indiqué sur les dessins. Leur nombre et leur emplacement sont déterminés selon les utilisation spécifiques envisagées.

D'autres modifications et/ou adjonctions peuvent être apportées par l'homme de métier au procédé et au dispositif qui viennent d'être décrits sans sortir du cadre de la présente invention.

**Revendications**

1. - Dispositif de traitement des effluents gazeux issus d'une unité de craquage catalytique (FCC) ayant au moins un premier étage de régénération (9 ; 70, 73), caractérisé en ce qu'il comprend en outre une unité de récupération de chaleur (CR) comportant une chambre de traitement des effluents (15) du type en lit entraîné ayant au moins une entrée (16 ; 76) pour les effluents issus de l'un au moins des étages de régénération (9 ; 70).

2. - Dispositif de traitement selon la revendication 1, caractérisé en ce qu'il comprend au moins une entrée (17) pour la masse absorbante utilisée pour le traitement des effluents et en ce que la granulométrie de ladite masse est comprise entre 0,1 et 100 micromètres.

3. - Ensemble selon l'une quelconque des revendications précédentes, caractérisé en ce qu'un moyen (30) est prévu pour diminuer la pression des effluents gazeux issus de l'un au moins desdits étages de régénération (9).

4. - Ensemble selon l'une quelconque des revendications précédentes, caractérisé en ce qu'un moyen (12) est en outre prévu pour réchauffer lesdits effluents, entre l'un au moins desdits étages de régénération et la chambre de traitement (15).

5. - Ensemble selon l'une des revendications précédentes, caractérisé en ce que ladite unité de récupération de chaleur (CR) comporte en outre un échangeur de chaleur (21) situé en aval de la chambre de traitement (15) relativement au sens de circulation des effluents, ledit échangeur (21) alimentant un dépoussiéreur (23) qui comprend au moins une première sortie (26) pour les fumées propres et une deuxième sortie (24) pour l'absorbant usé, une partie de l'absorbant usé étant recyclé vers ladite chambre de traitement (15).

6. - Ensemble selon l'une quelconque des revendications précédentes, caractérisé en ce que l'absorbant injecté dans ladite chambre de traitement (15) est un absorbant non régénérable.

7. - Ensemble selon l'une quelconque des revendications 1 à 5, caractérisé en ce qu'il comprend un moyen (50) destiné à régénérer ledit absorbant.

8. - Ensemble selon la revendication 7, caractérisé en ce que ledit moyen (50) de régénération de l'absorbant usé comprend un régénérateur d'absorbant (52) du type à lit fluidisé.

9. - Ensemble selon l'une quelconque des revendications 7 ou 8, caractérisé en ce que ledit moyen de régénération d'absorbant comprend en outre une sortie (58) destinée aux particules d'absorbants régénérés, ladite sortie (58) étant reliée à ladite entrée (17, 18) de la chambre de traitement destinée à l'absorbant régénérable.

10. - Ensemble de traitement selon l'une quelconque des revendications précédentes, caractérisé en ce qu'il comprend en outre un deuxième étage de régénération catalytique (73) qui fonctionne en excès d'air, et en ce que ledit premier étage (70) fonctionne en défaut d'air.

11. - Ensemble selon la revendication 10, caractérisé en ce qu'il comprend en outre un incinérateur (78) placé en amont de ladite chambre de traitement, alimenté par les fumées oxydées issues du deuxième étage de régénération (73) et par les fumées réductrices issues du premier étage de régénération (70).

12. - Dispositif selon la revendication 10, caractérisé en ce que ladite unité de récupération de chaleur (CR) comporte en outre un échangeur de chaleur (90) situé entre un incinérateur (78) et ladite chambre de traitement (15), et en ce que ledit échangeur de chaleur (90) est alimenté par les fumées oxydées issues du deuxième étage de régénération (73), les fumées réductrices issues du premier étage de régénération (70) étant introduites dans ledit incinérateur (78).

13. - Procédé de traitement des effluents gazeux issus d'une unité de craquage catalytique (FCC), caractérisé en ce qu'il consiste essentiellement à :

    – introduire séparément, dans une unité de récupération de chaleur (CR), des parties d'absorbant de granulométrie comprise entre 0,1 et 100 μm et lesdits effluents gazeux ;

– mettre en contact, au niveau d'une chambre de traitement (15) de type à lit circulant entraîné faisant partie de ladite unité de récupération, les effluents et les particules d'absorbant ;

– séparer les fumées désulfurées des parties d'absorbant usé.

**14.** - Procédé selon la revendication 13, caractérisé en ce qu'il consiste en outre à régénérer tout ou partie de l'absorbant usé issu de l'unité de récupération de chaleur (CR).

**15.** - Procédé selon la revendication 14, caractérisé en ce que la masse d'absorbant régénéré est réintroduite dans ladite chambre de traitement (15).

**16.** - Procédé selon la revendication 15, caractérisé en ce qu'avant d'être introduite dans la chambre de traitement (15), la masse d'absorbant régénéré est mélangée à une masse d'absorbant frais.

**17.** - Procédé selon l'une quelconque des revendications 13 à 16, caractérisé en ce que ledit four de craquage catalytique comprend deux étages, l'un (70) fonctionne en défaut d'air, l'autre (73) en excès d'air, les fumées issues de chaque étage étant introduites en deux zones différentes, en amont de la chambre de traitement (15).

**18.** - Procédé selon l'une quelconque des revendications 13 à 17, caractérisé en ce que le traitement consiste en une désulfuration desdits effluents gazeux.

**19.** - Procédé selon l'une quelconque des revendications 13 à 18, caractérisé en ce que le traitement consiste en une dénitrification des effluents gazeux.

**20.** - Procédé selon l'une quelconque des revendications 13 à 19, caractérisé en ce que la concentration moyenne de l'absorbant dans les fumées issues de la chambre de traitement (15) est comprise entre 5 et 200 g/m$^3$, de préférence entre 20 et 300g/m$^3$.

**FIG.1**

# FIG.2

FIG.3

EP 0 508 876 A1

**FIG.4**

| Office européen des brevets | RAPPORT DE RECHERCHE EUROPEENNE | Numero de la demande |
|---|---|---|

EP 92 40 0958

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | FR-A-2 636 720 (INSTITUT FRANCAIS DU PETROLE) <br><br> * Abrégé * <br> * revendications 1,2,6-8; figure 1 * <br>--- | 1-3, 5-11, 13-20 | B01D53/34 |
| Y,D | FR-A-2 642 663 (INSTITUT FRANCAIS DU PETROLE) <br><br> * page 3, ligne 6 - page 14, ligne 29; revendications 1-11; figure 1 * <br>--- | 1-3, 5-11, 13-20 | |
| A | EP-A-0 129 273 (METALLGESELLSCHAFT AG) <br> * Abrégé * <br> * page 13, ligne 18 - page 15, ligne 6; revendications 1-10; figure 1 * <br>--- | 1-20 | |
| A | EP-A-0 200 588 (CONSTRUCTIONS NAVALES ET INDUSTRIELLES DE LA MEDITERRANNEE) <br> * Le document entier * <br>--- | 1-20 | |
| A | WO-A-8 503 455 (HUGO PETERSEN) <br> * page 2, ligne 18 - page 3, ligne 11 * <br> * page 8, ligne 27 - page 9, ligne 18; figure 9 * | 1-20 | **DOMAINES TECHNIQUES RECHERCHES (Int. Cl.5)** <br><br> B01D |

Le présent rapport a été établi pour toutes les revendications

| Lieu de la recherche | Date d'achèvement de la recherche | Examinateur |
|---|---|---|
| LA HAYE | 02 JUILLET 1992 | EIJKENBOOM T. |